# EUROPÄISCHE PATENTSCHRIFT

(11) **EP 1 628 038 B1**
(45) Veröffentlichungstag und Bekanntmachung des Hinweises auf die Patenterteilung: **21.11.2007**
(21) Anmeldenummer: 05017255.0
(22) Anmeldetag: 09.08.2005
(51) Int. Cl.: F16F 9/32

(54) **Kolbenstange für einen Schwingungsdämpfer mit amplitudenabhängiger Dämpfung**
Piston rod for a vibration damper with amplitude-dependent damping
Tige de piston pour un amortisseur de vibrations avec amortissement dépendant de l'amplitude

(30) Priorität: 18.08.2004 DE 102004039919
(43) Veröffentlichungstag der Anmeldung: 22.02.2006
(73) Patentinhaber: ZF FRIEDRICHSHAFEN AG, 88046 Friedrichshafen (DE)
(72) Erfinder: Wilhelm, Ralf, 75394 Oberreichenbach (DE); Breun, Wolfgang, 97464 Niederwerrn (DE); Sauer, Klaus, 97520 Röthlein (DE); Eberlein, Ludwig, 97717 Sulzthal (DE)

(56) Entgegenhaltungen:
- EP-A- 0 034 220
- EP-A- 1 152 166
- EP-A- 1 496 285
- EP-A- 1 533 541
- DE-A1- 3 534 298
- US-A- 2 865 396
- PATENT ABSTRACTS OF JAPAN Bd. 2002, Nr. 06, 4. Juni 2002 (2002-06-04) & JP 2002 039248 A (SHOWA CORP), 6. Februar 2002 (2002-02-06)

## Beschreibung

Die Erfindung betrifft eine Kolbenstange für einen Schwingungsdämpfer gemäß dem Oberbegriff von Patentanspruch 1.

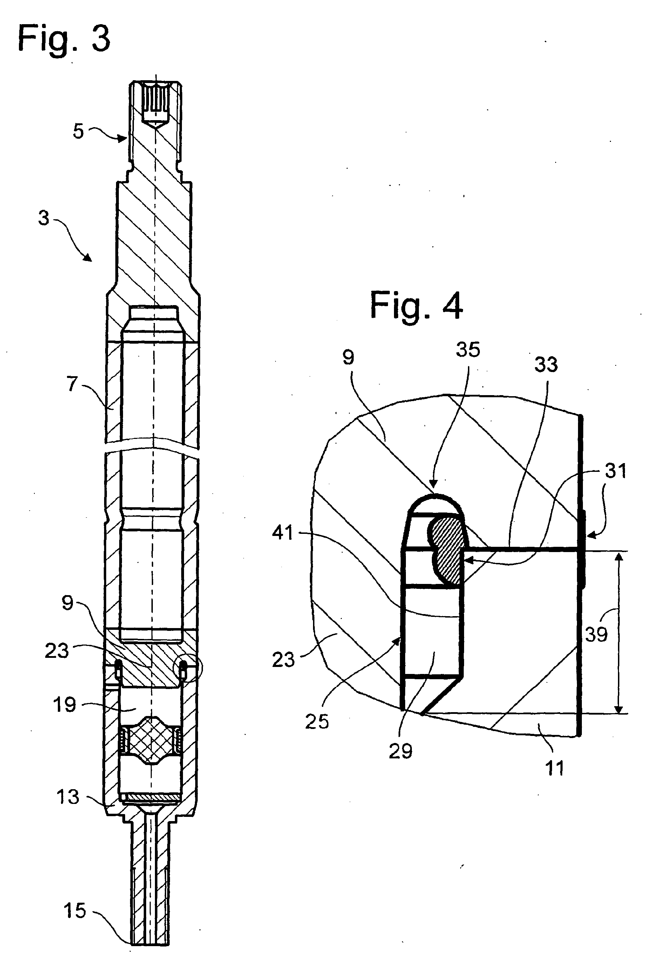

Die EP 1 152 166 A1 beschreibt einen Schwingungsdämpfer mit amplitudenabhängiger Dämpfkraft, an dessen Kolbenstange eine dämpfmediumgefüllte Kammer befestigt ist, in der ein Trennkolben axial beweglich angeordnet ist. In der Fig. 3 der EP 1 152 166 A1 wird die Kammer von einem Gehäuse gebildet, das mit der Kolbenstange im Bereich oberhalb eines Kolbens verbunden ist. In der Beschreibung ist kein Hinweis auf die Verbindungstechnik enthalten. Die Fig. 4 offenbart eine Schraubverbindung zwischen dem Gehäuse und der Kolbenstange.

Ein Problem besteht darin, dass die Schraubverbindung zwischen dem Gehäuse und der Kolbenstange gegen ungewolltes Lösen gesichert sein sollte. Eine Schraubverbindung ist zu dem vergleichsweise teuer.

Aufgabe der vorliegenden Erfindung ist es, ein Gehäuse mit einer Kolbenstange derart zu verbinden, dass die aus dem Stand der Technik bekannten Nachteile behoben sind.

Erfindungsgemäß wird die Aufgabe dadurch gelöst, dass der Kolbenstangenabschnitt zumindest auf einer Teillänge hohl ausgeführt und der Deckel des Gehäuses mit dem Kolbenstangenabschnitt verschweißt ist.

Die Kolbenstange weist durch die hohle Teillänge einerseits ein geringes Gewicht auf. Trotzdem muss man durch bei Verwendung des verschweißten Deckels keine zusätzlichen Maßnahmen für die Abdichtung der hohlen Kolbenstange vornehmen.

In weiterer vorteilhafter Ausgestaltung der Erfindung ist vorgesehen, dass der Deckel und ein rohrförmiges Zwischenstück des Gehäuses eine Labyrinthdichtung in Richtung einer Kammer des Gehäuses bilden. Es soll verhindert werden, dass Schweißspritzer in das Innere des Gehäuses gelangen und ggf. als Verunreinigungen Schäden in oder an Anbauteilen der Kolbenstange verursachen.

Der Deckel weist eine gestufte Außenkontur auf und greift mit einem Absatz in das Gehäuse ein. Zwischen einer Gehäuseinnenwandung und dem Absatz liegt ein Ringspalt vor, der ggf. auftretenden Schweißspritzer abhält.

Gemäß einem vorteilhaften Unteranspruch liegt zwischen einer Mantelfläche des Absatzes und einer Innenwandung des Zwischenstücks ein Ringraum zur Aufnahme von Schweißwerkstoff vor. Die Schweißverbindung zwischen dem Gehäuse und dem Deckel kann sich über die gesamte Wandstärke des Gehäuse erstrecken, ohne dass Qualitätsunterschiede über die Schweißnahtbreite auftreten.

Es lassen sich vergleichsweise kurze Schweißzeiten erreichen, wenn der Deckel mit dem Zwischenstück mittels einer Reibschweißung verbunden ist.

Die Reibschweißung wird mit einer axialen Vorspannung zwischen dem Deckel und dem Gehäuse durchgeführt. Eine stirnseitige Anschlussfläche des Deckels weist einen Freischnitt auf, der die Anschlussfläche von der Mantelfläche trennt. Die Tiefe des Freischnitts bestimmt einen maximalen Vorschubweg zwischen dem Deckel und dem Gehäuse, da man ohne den Freischnitt praktisch eine ebene Scheibe mit einem Rohr verschweißen würde und der axiale Verschiebeweg beim Reibschweißen ausschließlich von dem Rohrkörper aufgenommen werden müsste.

Bei einer Ausführungsform ist vorgesehen, dass der Abstand der Mantelfläche des Deckels zur Innenwandung des Zwischenstücks im Bereich des Freischnitts größer ist als an einer Dichtkante des Deckels. Man erhält einerseits einen großen Ringraum für die Aufnahme von Schweißgut und andererseits eine wirkungsvolle Abdichtung zum Gehäuseinneren, wobei der Begriff Dichtkante nicht unbedingt als eine hermetische Trennlinie zu verstehen ist. So kann der Absatz am Deckel eine schwalbenschwanzförmige Mantelfläche aufweisen.

Bei einer alternativen Variante weist das Zwischenstück des Gehäuses im Bereich eine axialen Überdeckung mit dem Deckel eine gestufte Innenkontur auf. Der Deckel verfügt dann über eine einfache T-Grundform und lässt sich entsprechend einfach herstellen, z. B. auch als ein Schmiedeteil.

Anhand der folgenden Figurenbeschreibung soll die Erfindung näher erläutert werden.

Es zeigt:
- Fig. 1: Schnitt durch eine Kolbenstange mit einem Deckel, der einen schwalbenschwanzförmigen Absatz aufweist.
- Fig. 2: Detailansicht zur Fig. 1
- Fig. 3: Schnitt durch eine Kolbenstange mit einer gestuften Innenkontur eines Zwischenstücks
- Fig. 4: Detailansicht zur Fig: 3

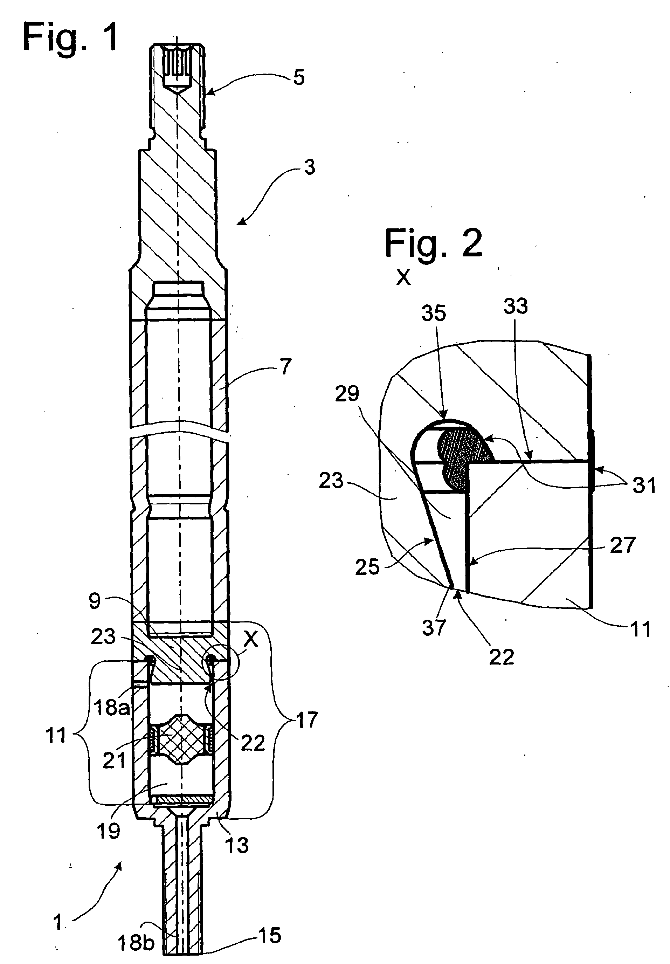

Die Figur 1 zeigt eine Kolbenstange 1, wie sie in einem Schwingungsdämpfer mit amplitudenabhängiger Dämpfkraft zur Anwendung kommen kann. Die Kolbenstange 1 gliedert sich in mehrere Abschnitte. An einem ersten Ende verfügt die Kolbenstange über einen Kolbenstangenkopf 3 mit Anschlussfunktionsflächen 5, z. B. für ein nicht dargestelltes Stiftgelenk. Dem Kolbenstangenkopf schließt sich ein Kolbenstangenabschnitt 7 an, der zumindest auf einer Teillänge hohl ausgeführt ist. Das offene Ende des Kolbenabschnitts 7 wird von einem Deckel 9 verschlossen. Die drei beschriebenen Komponenten 3; 7; 9 der Kolbenstange 1 werden als Einzelteile mit einem gewissen Übermaß hergestellt und anschließend verschweißt. Danach erfolgt die maßliche Endbearbeitung, sowie eine Oberflächenbeschichtung, z. B. Verchromen. Als Schweißverfahren kommt ein Reibschweißen zur Anwendung. Der Deckel 9 wird schon vor der maßlichen Endbearbeitung und dem Verchromen angeschweißt, damit sich während der Fertigung innerhalb des hohlen Kolbenstangenabschnitts keine Fertigungsverunreinigungen, wie z. B. Schmier- oder Reinigungsflüssigkeit sammeln können.

Dem Deckel 9 schließt sich ein rohrförmiges Zwischenstück 11 mit einem Boden 13 und einem Befestigungsanschluss 15 für einen ebenfalls nicht dargestellten Kolben an. Der Deckel, das Zwischenstück 11 und der Boden 13 bilden ein Gehäuse 17, in dessen Kammer 19 ein Trennkolben 21 zwischen dem Boden und dem Deckel axial beweglich angeordnet ist. Die Kammer verfügt über zwei Anschlussöffnungen 18a, 18b, über die ein Dämpfmediumaustausch erfolgen kann.

Das rohrförmige Zwischenstück 11 ist mit dem Deckel 9 ebenfalls verschweißt, wobei der Deckel und das Zwischenstück eine Labyrinthdichtung 22 bilden. Der Deckel 9 weist eine gestufte Außenkontur auf und greift mit einem Absatz 23 in das Gehäuse 17 ein. In der Fig. 2 ist die Labyrinthdichtung 22 im Detail zu erkennen. Zwischen einer Mantelfläche 25 des Absatzes 23 und einer Innenwandung 27 des Zwischenstücks 11 liegt ein Ringraum 29 zur Aufnahme von Schweißwerkstoff 31 vor. Der Deckel 9 wird mit dem Zwischenstück 11 über eine Reibschweißung verbunden, so dass aufgrund einer axialen Staubewegung zwischen den beiden Teilen beim Verschweißen Werkstoff teilweise nach radial innen verdrängt wird oder sich außenseitig an der Nahtstelle ablagert. Eine stirnseitige Anschlussfläche 33 des Deckels 9 weist einen Freischnitt 35 auf, der die Anschlussfläche 33 von der Mantelfläche 25 trennt. Der rinnenförmige Freischnitt nimmt ebenfalls Schweißwerkstoff auf.

Der Abstand der Mantelfläche 25 des Deckels 9 zur Innenwandung 27 des Zwischenstücks ist im Bereich des Freischnitts 35 größer als an einer Dichtkante 37 des Deckels. In diese Ausführungsbeispiel weist der Deckel eine schwalbenschwanzförmige Mantelfläche auf, so dass sich eventuelle Schweißspritzer auf der Mantelfläche ablagern und aufgrund ihrer Größe die Labyrinthdichtung jenseits der Dichtkante 37 nicht passieren können.

Die Fig. 3 zeigt eine Kolbenstange, die in ihrem prinzipiellen Aufbau der Fig. 1 gleicht. Abweichend kommt, wie die Fig. 4 zeigt, eine geänderte Kontur der Labyrinthdichtung 21 zur Anwendung. Der Deckel 9 verfügt über einen einfachen zylindrischen Absatz 23. Das Zwischenstück 11 des Gehäuses 17 weist im Bereich einer axialen Überdeckung 39 eine gestufte Innenkontur 41 auf. Zwischen der Mantelfläche 25 und der Innenkontur 41 steht der Ringraum 29 zur Verfügung, der sich in Richtung der Kammer 19 verengt, so dass eventuelle Schweißspritzer auf der Innenkontur 41 zur Anlage kommen können und damit die Funktion der Labyrinthdichtung erfüllt wird.

## Patentansprüche

1. Kolbenstange mit einem als Gehäuse ausgebildeten Ende, wobei das Gehäuse einen Deckel aufweist, der das Innere des Gehäuses abdichtet, wobei das Gehäuse räumlich zwischen einem Kolbenstangenabschnitt und einem Befestigungsanschluss der Kolbenstange für einen Kolben angeordnet ist, wobei durch das Gehäuse eine Kammer begrenzt wird, in der ein Trennkolben axial beweglich angeordnet ist
**dadurch gekennzeichnet,**
**dass** der Kolbenstangenabschnitt (7) zumindest auf einer Teillänge hohl ausgeführt und der Deckel (9) des Gehäuses (17) mit dem Kolbenstangenabschnitt (7) verschweißt ist.

2. Kolbenstange nach Anspruch 1,
**dadurch gekennzeichnet,**
**dass** der Deckel (9) und ein rohrförmiges Zwischenstück (11) des Gehäuses (17) eine Labyrinthdichtung (22) in Richtung der Kammer (19) des Gehäuses (17) bilden.

3. Kolbenstange nach Anspruch 2,
**dadurch gekennzeichnet,**
**dass** der Deckel (9) ein gestufte Außenkontur aufweist und mit einem Absatz (23) in das Gehäuse (17) eingreift.

4. Kolbenstange nach Anspruch 3,
**dadurch gekennzeichnet,**
**dass** zwischen einer Mantelfläche (25) des Absatzes (23) und einer Innenwandung (27; 41) des Zwischenstücks (11) ein Ringraum (29) zur Aufnahme von Schweißwerkstoff (31) vorliegt.

5. Kolbenstange nach Anspruch 4,
**dadurch gekennzeichnet,**
**dass** eine stirnseitige Anschlussfläche (33) des Deckels (9) einen Freischnitt (35) aufweist, der die Anschlussfläche (33) von der Mantelfläche (25) trennt.

6. Kolbenstange nach Anspruch 5,
**dadurch gekennzeichnet,**
**dass** der Abstand der Mantelfläche (25) des Deckels (9) zur Innenwandung (27; 41) des Zwischenstücks (11) im Bereich des Freischnitts (35) größer ist als an einer Dichtkante (37) des Deckels (9).

7. Kolbenstange nach Annspruch 6,
**dadurch gekennzeichnet,**
**dass** der Absatz (23) am Deckel (9) eine schwalbenschwanzförmige Mantelfläche (25) aufweist.

8. Kolbenstange nach Anspruch 6,
**dadurch gekennzeichnet,**
**dass** das Zwischenstück (11) des Gehäuses (17) im Bereich einer axialen Überdeckung (39) mit dem Deckel (9) eine gestufte Innenkontur (41) aufweist.

9. Kolbenstange nach Anspruch 1,
**dadurch gekennzeichnet,**
**dass** der Deckel (9) mit dem Zwischenstück (11) mittels einer Reibschweißung verbunden ist.

## Claims

1. Piston rod having an end which is configured as a housing, the housing having a cover which seals the interior of the housing, the housing being arranged spatially between a piston-rod section and a fastening connection of the piston rod for a piston, a chamber being delimited by the housing, in which chamber a separating piston is arranged in an axially movable manner, **characterized in that** the piston-rod section (7) is of hollow configuration at least on a part length and the cover (9) of the housing (17) is welded to the piston-rod section (7).

2. Piston rod according to Claim 1, **characterized in that** the cover (9) and a tubular intermediate piece (11) of the housing (17) form a labyrinth seal (22) in the direction of the chamber (19) of the housing (17).

3. Piston rod according to Claim 2, **characterized in that** the cover (9) has a stepped outer contour and engages by way of a shoulder (23) into the housing (17).

4. Piston rod according to Claim 3, **characterized in that** an annular space (29) for receiving welding material (31) is present between a circumferential face (25) of the shoulder (23) and an inner wall (27; 41) of the intermediate piece (11).

5. Piston rod according to Claim 4, **characterized in that** an end-side connecting face (33) of the cover (9) has a cut-out (35) which divides the connecting face (33) from the circumferential face (25).

6. Piston rod according to Claim 5, **characterized in that** the spacing of the circumferential face (25) of the cover (9) from the inner wall (27; 41) of the intermediate piece (11) is greater in the region of the cut-out (35) than at a sealing edge (37) of the cover (9).

7. Piston rod according to Claim 6, **characterized in that** the shoulder (23) on the cover (9) has a dovetailed circumferential face (25).

8. Piston rod according to Claim 6, **characterized in that** the intermediate piece (11) of the housing (17) has a stepped inner contour (41) in the region of an axial overlap (39) with the cover (9).

9. Piston rod according to Claim 1, **characterized in that** the cover (9) is connected to the intermediate piece (11) by means of a friction weld.

## Revendications

1. Tige de piston avec une extrémité réalisée sous forme de boîtier, le boîtier présentant un couvercle qui assure l'étanchéité de l'intérieur du boîtier, sachant que le boîtier est spatialement disposé entre une partie de tige de piston et un raccord de fixation de la tige de piston pour un piston, le boîtier délimitant une chambre dans laquelle un piston de séparation est disposé à déplacement axial, **caractérisée en ce que** la partie de tige de piston (7) est réalisée creuse au moins sur une longueur partielle, et le couvercle (9) du boîtier (17) est soudé à la partie de tige de piston (7).

2. Tige de piston selon la revendication 1, **caractérisée en ce que** le couvercle (9) et un élément intercalé tubulaire (11) du boîtier (17) forment un joint à labyrinthe (22) en direction de la chambre (19) du boîtier (17).

3. Tige de piston selon la revendication 2, **caractérisée en ce que** le couvercle (9) présente un contour extérieur étagé et s'engage dans le boîtier (17) par un gradin (23).

4. Tige de piston selon la revendication 3, **caractérisée en ce qu'**un espace annulaire (29) destiné à recevoir du matériau de soudage (31) est présent entre une face d'enveloppe (25) du gradin (23) et une paroi intérieure (27 ; 41) de l'élément intercalé (11).

5. Tige de piston selon la revendication 4, **caractérisée en ce qu'**une face de raccordement frontale (33) du couvercle (9) présente une découpe libre (35) qui sépare la face de raccordement (33) de la face d'enveloppe (25).

6. Tige de piston selon la revendication 5, **caractérisée en ce que** la distance entre la face d'enveloppe (25) du couvercle (9) et la paroi intérieure (27 ; 41) de l'élément intercalé (11) est plus grande dans la région de la découpe libre (35) que sur une arête d'étanchéité (37) du couvercle (9).

7. Tige de piston selon la revendication 6, **caractérisée en ce que** le gradin (23) sur le couvercle (9) présente une face d'enveloppe (25) en queue d'aronde.

8. Tige de piston selon la revendication 6, **caractérisée en ce que** l'élément intercalé (11) du boîtier (17) présente, dans la région d'un recouvrement axial (39) avec le couvercle (9), un contour intérieur étagé (41).

9. Tige de piston selon la revendication 1, **caractérisée en ce que** le couvercle (9) est assemblé à l'élément intercalé (11) par soudage par friction.
